# EUROPÄISCHE PATENTSCHRIFT

(11) **EP 0 885 945 B1**
(45) Veröffentlichungstag und Bekanntmachung des Hinweises auf die Patenterteilung: **29.08.2001**
(21) Anmeldenummer: 98109701.7
(22) Anmeldetag: 28.05.1998
(51) Int. Cl.: C09K 19/38, G02B 5/30

(54) **Verfahren zur Verbreiterung cholesterischer Reflexionsbanden von photopolymerisierbaren cholesterischen Flüssigkristallen und optische Elemente hergestellt nach diesem Verfahren**
Method for broadening the cholesteric reflexion bands of photopolymerised cholesteric liquid crystals and optical elements made according to this method
Méthode pour élargir la bande de réflexion cholestérique de cristaux liquides cholestériques photopolymérisés et éléments optiques ainsi réalisés

(30) Priorität: 19.06.1997 DE 19726051
(43) Veröffentlichungstag der Anmeldung: 23.12.1998
(73) Patentinhaber: Consortium für elektrochemische Industrie GmbH, 81379 München (DE)
(72) Erfinder: Schwalb, Georg, Dr., 80809 München (DE); Kopf, Mechthild, 85659 Fostern (DE); Kreuzer, Franz-Heinrich, Dr., 82152 Martinsried (DE)
(74) Vertreter: Potten, Holger

(56) Entgegenhaltungen:
- EP-A- 0 533 215
- EP-A- 0 606 940
- EP-A- 0 819 971
- LI L ET AL: "9.4: A SINGLE-LAYER SUPER BROADBAND REFLECTIVE POLARIZER" SID INTERNATIONAL SYMPOSIUM. DIGEST OF TECHNICAL PAPERS, SAN DIEGO, MAY 12 - 17, 1996, Nr. VOL. 27, 12. Mai 1996, Seiten 111-113, XP000621034 SOCIETY FOR INFORMATION DISPLAY
- MAUER R ET AL: "CHOLESTERIC REFLECTORS WITH A COLOR PATTERN" SID INTERNATIONAL SYMPOSIUM DIGEST OF TECHNICAL PAPERS, SAN JOSE, JUNE 14 - 16, 1994, Nr. VOL. 25, 14. Juni 1994, Seiten 399-402, XP000462723 MORREALE J

## Beschreibung

Die Erfindung betrifft Verfahren zur Verbreiterung der Reflexionsbanden von photopolymerisierbaren cholesterischen Flüssigkristallen sowie optische Elemente wie Farbfilter, Reflektoren, Polarisatoren und Pigmente die nach diesem Verfahren hergestellt sind.

Flüssigkristalline Materialien mit cholesterischen Eigenschaften, kurz cholesterische Flüssigkristalle genannt, sind Stoffe mit helikaler Anordnung der Moleküle. Üblicherweise werden diese Materialien als dünne Schicht zwischen zwei geeigneten Substraten so präpariert, daß die Helixachse senkrecht auf den Substratoberflächen steht. Die Ganghöhe ("pitch") der Helix ist materialabhängig und über die Schichtdicke konstant. Solche optisch anisotropen Schichten können eine zirkulare Lichtkomponente vollständig reflektieren, falls Drehsinn und Lichtwellenlänge λ im Material mit dem Drehsinn und der Ganghöhe p der cholesterischen Helix übereinstimmen (cholesterische Reflexion). Die zweite zirkulare Lichtkomponente mit entgegengesetztem Drehsinn wird hingegen vollständig transmittiert.

Die cholesterische Reflexion tritt dabei in einem spektralen Band zwischen den Wellenlängen λ₁ = p*nₒ und λ₂ = p*nₑ auf, wobei nₑ und nₒ den außerordentlichen und ordentlichen Brechungsindex des Materials bezeichnen. Diese Reflexionsbande kann durch zwei Parameter, die Mittenwellenlänge λₒ und die Breite Δλ charakterisiert werden. Die Mittenwellenlänge λₒ hängt vom mittleren Brechungsindex und vom Pitch p des Materials ab. Die Breite Δλ der cholesterischen Reflexionsbande ist gemäß Δλ = p* (nₑ-nₒ) von der Doppelbrechung Δn = nₑ-nₒ des Materials abhängig. In der Praxis ist die Doppelbrechung der meisten cholesterischen Materialien im sichtbaren Spektralbereich auf Werte kleiner als 0,3 beschränkt. Daraus folgt eine maximal mögliche Bandbreite von etwa 100 nm. Meist werden jedoch nur 30 - 50 nm erreicht. Außerhalb der Reflexionsbande und in Abwesenheit von Absorption wird Licht beider Polarisationsrichtungen (rechtszirkular und linkszirkular, d.h. unpolarisiert) vollständig transmittiert. Das reflektierte bzw. transmittierte zirkular polarisierte Licht kann, falls gewünscht, durch eine zusätzliche Viertelwellen-Verzögerungsschicht in linear polarisiertes übergeführt werden.

Eine wesentliche Voraussetzung für die Verwendung cholesterischer Materialien ist die genügende thermische und mechanische Stabilität der Schichten. Diese Stabilität kann durch das Fixieren des Orientierungszustandes durch Polymerisation oder durch rasches Abkühlen auf Temperaturen unterhalb des Glaspunktes erreicht werden. Solche stabile cholesterische Schichten sind beispielsweise beschrieben von R. Maurer et al. unter dem Titel "Polarizing Color Filters made from Cholesteric LC Silicones" im SID 90 Digest, 1990, S. 110 - 113.

Aufgrund der genannten optischen und mechanischen Eigenschaften eignen sich cholesterische Materialien sowohl als polarisierende und farbselektive Reflektoren als auch als polarisierende und farbselektive optische Filter. Sie haben gegenüber Filtern aus absorbierenden Materialien den großen Vorteil, daß das Aufheizen des Filtermaterials weitgehend vermieden wird. Bei entsprechender Bandbreite der cholesterischen Reflexion können diese Materialien auch als sogenannter reflektiver Polarisator z.B. in Flüssigkristall-Displays eingesetzt werden: Trifft unpolarisiertes Licht aus einer Lichtquelle, die sich zwischen einer cholesterischen Schicht und einem Spiegel (Metall) befindet, auf die cholesterische Schicht, so tritt zirkular polarisiertes Licht mit einem der Helix der Schicht entgegengesetztem Drehsinn durch die Schicht hindurch, der verbleibende Anteil mit gleichem Drehsinn wird jedoch reflektiert. Diese Komponente trifft auf den Spiegel und erfährt eine Inversion des Drehsinns der Zirkularpolaristion mit der Folge, daß nunmehr auch diese Lichtkomponente die cholesterische Schicht passieren kann. Somit gelingt theoretisch eine vollständige Umwandlung von unpolarisiertem Licht in zirkular polarisiertes Licht. Gegenüber konventionellen Anordnungen, bestehend aus Lichtquelle, Spiegel und absorptiv arbeitendem Polarisator ist eine Verdoppelung der Lichtausbeute der Beleuchtungseinheit eines Flüssigkristalldisplays möglich. Zugleich wird durch den Wegfall der Absorption ein Aufheizen und Ausbleichen des Polarisators vermieden. (S.V. Belayev, M. Schadt, M.I. Barnik, J. Fünfschilling, N.V. Malimoneko and K. Schmitt, Jpn. J. Appl. Phys. **29,** L273 (1990))

Photopolymerisierbare cholesterische Materialien können auch photostrukturiert werden. Dies ist beispielsweise beschrieben von R. Maurer et al. "Cholesteric Reflectors with a Color Pattern" im SID 94 Digest, 1994, S. 399 - 402. Das darin beschriebene Material zeigt eine ausgeprägte Thermochromie, d.h. eine starke Abhängigkeit der Reflexionsfarbe von der Temperatur. Deshalb kann die gewünschte Farbe durch die Temperatur der Probe eingestellt und mittels UV-Belichtung durch eine Maske fixiert werden. Die Farbe der noch unbelichteten Bereiche der cholesterischen Schicht kann durch eine anschließende Temperaturänderung verändert werden. Diese Farbe wird durch eine zweite UV-Belichtung, die gegebenfalls wieder durch eine Maske hindurch erfolgt, nachhaltig fixiert. Dieser Vorgang kann bei anderen Temperaturen mit weiteren Masken wiederholt werden, um so mehrfarbige strukturierte Filter und Reflektoren herzustellen. Solche strukturierten Filter bzw. Reflektoren können beispielsweise in Farbprojektoren und in Flüssigkristalldisplays Verwendung finden.

Eine weitere Anwendung für cholesterische Materialien sind Pigmente, die durch das Mahlen und Sieben von cholesterischen Filmen hergestellt werden. Geeignete Materialien und ihre Herstellung sind beispielsweise in EP 0 601 483 beschrieben.

Die tatsächliche Realisierung dieser Anwendungsmöglichkeiten wird bisher durch die limitierte Breite der Reflexionsbanden stark eingeschränkt. Für den industriellen Einsatz ist es darüber hinaus wünschenswert, daß sowohl die Mittenwellenlänge der Reflexionsbande wie auch die Breite der Reflexionsbande gemäß den jeweiligen Anforderungen frei und unabhängig voneinander eingestellt werden können. Für die spezielle Anwendung als reflektiver Breitbandpolarisator ist es sogar notwendig, daß die Reflexionsbande den gesamten sichtbaren Spektralbereich abdeckt, d.h. daß die cholesterische Schicht eine Bandbreite von mehr als 300 nm aufweisen muß.

Das Problem der zu geringen Bandbreite kann prinzipiell dadurch gelöst werden, daß das optische Element aus mehreren Schichten mit unterschiedlichen Mittenwellenlängen aufgebaut wird. Dies ist in dem oben erwähnten Artikel von R. Maurer et al.. beschrieben. Jedoch ist diese Methode sehr kostenintensiv und hat den Nachteil, daß die optische Qualität des optischen Elements mit jeder zusätzlichen Schicht aufgrund von Streuung an Fehlstellen und Inhomogenitäten abnimmt.

Eine andere Methode zur Lösung des o.g. Problems ist die Verbreiterung der Reflexionsbande durch einen Gradienten in der Ganghöhe der Helix (Pitchgradient). Dieser Ansatz ist aus theoretischen Untersuchungen schon länger bekannt (z.B. S. Mazkedian, S. Melone, F. Rustichelli, J. Physique **37,** 731 (1976) oder L.E. Hajdo, A.C. Eringen, J. Opt. Soc. Am. **36**, 1017 (1979)).

Bei dem in EP 0 606 940 A2 beschriebenen Verfahren wird eine Mischung aus chiralen und nematischen Monomeren mit unterschiedlicher Reaktivität bezüglich ihrer Polymerisationseigenschaften verwendet, die zusätzlich einen Farbstoff enthält, dessen Absorptionseigenschaften auf die zur Photopolymerisation verwendete UV-Strahlung abgestimmt sind. Bei der Photopolymerisation absorbiert der Farbstoff einen Teil des UV-Lichtes und erzeugt so einen starken Intensitätsgradienten innerhalb der cholesterischen Schicht. Aufgrund der unterschiedlichen Reaktivität der nematischen und chiralen Monomere findet ein Diffusionsprozess statt, der den gewünschten Pitchgradienten erzeugt. Gemäß EP 0 606 940 A2 handelt es sich dabei um einen linearen Pitchgradienten, wobei der kleinste Pitch auf der der UV-Quelle zugewandten Seite auftritt. Das beschriebene Verfahren ist weiterhin charakterisiert durch eine kontinuierliche UV- Belichtung mit geringen Intensitäten über einen langen Zeitraum.

Ein Nachteil dieses Verfahrens liegt darin, daß es prinzipiell eine Mischung von verschiedenen Monomeren mit unterschiedlicher Reaktivität bezüglich der Polymerisation benötigt und zusätzlich ein Farbstoff eingemischt werden muß. Dieses Verfahren hat damit eine aufwendige und kostenintensive Materialsynthese zur Voraussetzung. Desweiteren ist von Nachteil, daß die ultraviolette Belichtung über eine relativ lange Zeit, in der Größenordnung von 10 min, konstant gehalten werden muß. In einem kontinuierlichen Herstellungsprozess, bei dem die optische Schicht auf bzw. zwischen Folien kontinuierlich aufgetragen und photopolymerisiert wird, ist deshalb eine lange, homogen ausgeleuchtete Belichtungsstrecke notwendig. Durch die große Verweilzeit wird der erreichbare Durchsatz an produzierter Folie stark eingeschränkt. Auch aus der Zumischung des UV-Farbstoffs resultieren einige Nachteile. So kann die Absorption des Farbstoffs, wie in einem Beispiel von EP 0 606 940 A2 beschrieben, zu einer unerwünschten Einschränkung der Bandbreite im kurzwelligen Spektralbereich führen. Daneben kann die mit der Farbstoffabsorption verbundene Erwärmung zur Beeinträchtigung oder sogar Zerstörung der optisch aktiven Schicht führen.

Ein weiteres Verfahren, das ebenfalls auf die Erzeugung eines Pitchgradienten zielt, wurde von Faris et al. "A Single-Layer Super Broadband Reflective Polarizer" im SID 96 Digest, 1996, pp 111 - 113 veröffentlicht. Dieses Verfahren basiert auf einer Mischung aus einem photovernetzbaren cholesterischen Polysiloxan mit einem nichtvernetzbaren niedermolekularen Nematen. Auch hier wird eine langsame Photovernetzung bei geringer UV-Belichtung durchgeführt, wobei während der UV-Polymerisation eine Phasenseparation zwischen dem vernetzbaren Polysiloxan und dem nichtvernetzbaren Nematen stattfinden soll. Infolge dieser Phasenseparation sollen die segregierten Moleküle innerhalb der Schicht diffundieren können und einen Konzentrationsgradienten erzeugen, der wiederum einen Pitchgradienten zur Folge hat.

Wie bei dem vorgenannten Verfahren hat auch dieses Verfahren den prinzipiellen Nachteil, daß mindestens zwei verschiedene Ausgangskomponenten synthetisiert werden müssen. Auch dieses Verfahren beruht darauf, daß eine langsame Vernetzung dadurch erzielt wird, daß die UV-Belichtung für eine längere Zeit aufrechterhalten werden muß mit den schon oben beschriebenen Nachteilen für einen kontinuierlichen Herstellungsprozeß.

Aufgabe der vorliegenden Erfindung ist es, ein Verfahren zur Verbreiterung der cholesterischen Reflexionsbanden von photopolymerisierbaren cholesterischen Flüssigkristallen bereitzustellen, mit dem es möglich ist, Mittenwellenlänge und Bandbreite der cholesterischen Reflexionsbande des polymerisierten Materials unabhängig voneinander einzustellen und dabei die oben aufgeführten Nachteile, insbesondere die langandauernde UV-Belichtung, zu vermeiden.

Die Aufgabe wird durch ein Verfahren gelöst, das die folgenden drei Schritte umfaßt:
1) teilweises polymerisieren einer Schicht enthaltend photopolymerisierbare cholesterische Flüssigkristalle durch eine definierte kurzzeitige Belichtung mit aktinischem Licht bei einer definierten Temperatur,
2) einhalten einer definierten Wartezeit ohne Belichtung (Dunkelphase) bei einer definierten Temperatur
3) fixieren der so erhaltenen Schicht durch eine weitere Belichtung mit aktinischem Licht bei einer definierten Temperatur.
Im Gegensatz zu bekannten Verfahren ist es bei dem erfindungsgemäßen Verfahren möglich, von nur einer flüssigkristallinen Substanz mit cholesterischer Phase auszugehen. Es können aber auch Mischungen flüssigkristalliner Substanzen mit cholesterischer Phase verwendet werden oder weitere Komponenten zugemischt werden, um andere gewünschte Eigenschaften zu optimieren.

Das erfindungsgemäße Verfahren hat gegenüber bekannten Verfahren den wesentlichen Vorteil, daß keine langandauernde Belichtung vorgenommem werden muß.

Geeignete Ausgangsmaterialien für das erfindungsgemäße Verfahren sind photopolymerisierbare Materialien mit cholesterischen Eigenschaften.

Solche Materialien sind beispielsweise aus J.Lub, D.J.Broer, A.M. Hikmet and K.G. Nierop, Liq. Cryst. 18,319,(1995) bekannt. Beispielsweise können cholesterische Monomere, Oligomere oder Polymere oder Mischungen aus cholesterischen Monomeren, Oligomeren oder Polymeren mit chiralen Monomeren oder Mischungen aus cholesterischen Monomeren, Oligomeren oder Polymeren mit achiralen Monomeren oder Mischungen aus cholesterischen Oligomeren mit chiralen und achiralen Monomeren oder Mischungen aus achiralen flüssigkristalline Phasen aufweisenden Monomeren, Oligomeren oder Polymeren mit chiralen Monomeren verwendet werden.

Vorzugsweise werden cholesterische Oligomere auf Polysiloxanbasis verwendet.

Besonders bevorzugt werden cholesterische Oligomere auf Polysiloxanbasis, die Cholesterinderivate oder isomere Cholesterinderivate als Chiralikum enthalten, verwendet. Solche Materialien sind beispielsweise aus US 5,211,877 bekannt.

Es ist bekannt, daß Flüssigkristalle (LC's), die aus Organosiloxangerüsten bestehen, welche mesogene Seitengruppen tragen, sich gegenüber nicht siloxanhaltigen LC-Systemen dadurch auszeichnen, daß sich durch die Wahl des Organosiloxanrückgrats das Molekulargewicht einfach und nahezu beliebig variieren läßt. Dadurch können die flüssigkristallinen Eigenschaften, wie z.B. Phasenverhalten, Glaspunkt und Klärpunkt oder beispielsweise auch die Viskosität, in weiten Bereichen den Erfordernissen angepaßt werden.

Das erfindungsgemäße Verfahren ist auf links- und rechtsdrehende Materialen aus den oben beschriebenen Materialklasse anwendbar. Die Photopolymerisation der Substanzen wird durch die Zugabe eines Photoinitiators ermöglicht.

Vorzugsweise wird das photopolymerisierbare Material in Form einer Schicht, z.B. in Form eines Films im erfindungsgemäßen Verfahren verwendet.

Die Filmpräparation erfolgt nach aus der Literatur bekannten Methoden. Das photopolymerisierbare Material wird z.B. als dünne homogene Schicht auf ein Substrat oder zwischen zwei Substraten präpariert und gegebenenfalls durch weitere an sich bekannte Maßnahmen, die beispielhaft nachfolgend beschrieben werden, orientiert.

Als Substrate können feste oder flexible Träger oder Kombinationen davon verwendet werden. Aufgrund der glatten Oberfläche und Transparenz sind Glasplatten oder Folien besonders geeignet.

Bevorzugt sind optisch isotrope Substrate, da sie den Polarisationszustand des Lichtes nicht ändern. Für Filter und Reflektoren, die statt der zirkularen eine lineare Polarisation erzeugen sollen, ist als Träger ein optisch einachsiges doppelbrechendes Substrat, das im benutzten Wellenlängenbereich eine optischen Verzögerung von 0,25 mal der Wellenlänge aufweist, besonders geeignet. Eine solche Viertelwellen-Verzögerungsschicht, kurz λ/4 Verzögerungsschicht wird beispielweise durch definiertes Recken einer Polycarbonat-, einer Polyethylenterephthalat- oder einer Polypropylenfolie hergestellt. Alternativ kann als Substrat auch ein Laminat zweier verschiedener doppelbrechender Folien verwendet werden, deren Streckrichtungen im wesentlichen senkrecht zueinander ausgerichtet sind. Aufgrund der unterschiedlichen Dispersion der beiden Folien ändert sich auch die Gesamtverzögerung des Laminats mit der Wellenlänge. Das Folienmaterial und der Grad der Reckung sind so auszuwählen, daß möglichst über den gesamten, vom Filter bzw. Reflektor benutzten Wellenlängenbereich eine Gesamtverzögerung von 0,25 mal der Wellenlänge auftritt.

Natürlich kann eine λ/4 Verzögerungsschicht auch nachträglich mit der erfindungsgemäßen cholesterischen Schicht kombiniert werden.

Vorteilhaft ist die Verwendung von Orientierungsschichten auf der der cholesterischen Schicht zugewandten Substratseite, beispielsweise in Form von geriebenen Polyimid- oder geriebenen Polyvinylalkoholschichten. Diese Orientierungsschichten begünstigen eine gute Orientierung der cholesterischen Helixachse senkrecht zur Substratoberfläche. Bei der Verwendung von Folien kann auch das unidirektionelle Reiben der Folienoberfläche eine gute Orientierung sicherstellen.

Das Material kann sowohl aus der Schmelze als auch aus der Lösung mit anschließenden Abdampfen des Lösungsmittels nach an sich bekannten Verfahren, beispielsweise mit Hilfe einer Rakel, einer Walze oder durch Spincoating, aufgetragen werden.

Die aufgetragene Schichtdicke beträgt vorzugsweise 3 - 60 *µ*m, besonders bevorzugt 5 bis 40 *µ*m und kann beispielsweise durch einen Spacer oder durch ein Auftragsverfahren mit definierter Schichtdicke eingestellt werden.

Die makroskopische Orientierung der Schicht erfolgt bei einer Temperatur, bei der das Material eine cholesterische Phase aufweist und wird durch an sich bekannte Verfahren wie beispielsweise das Scheren des Materials oder das Anlegen elektrischer oder magnetischer Felder erreicht. Das Auftragen und die Orientierung der flüssigkristallinen Substanzen kann vollkontinuierlich, semikontinuierlich oder diskontinuierlich geschehen. Eine so hergestellte orientierte aber noch nicht polymerisierte Schicht hat einen über die Schichtdicke konstanten Pitch.

Im ersten erfindungsgemäß notwendigen Verfahrensschritt wird der orientierte cholesterische Film mit aktinischem Licht bestrahlt. Aktinisches Licht ist photochemisch aktives Licht, beispielsweise UV-Licht, Röntgenstrahlung, Gammastrahlung oder die Bestrahlung mit hochenergetischen Teilchen wie Elektronen oder Ionen.

Bevorzugt ist die Bestrahlung mit UV-Licht.

Die Bestrahlung wird so durchgeführt, daß nur ein Teil aller möglichen polymerisierbaren Moleküle nach der Einstrahlung polymerisiert ist. Der Anteil der polymerisierten Moleküle nach der Bestrahlung sollte vorzugsweise zwischen 0,1 % und 69 %, besonders bevorzugt zwischen 1 und 50 % der polymerisierbaren Moleküle betragen.

Ist dieser Anteil geringer als angegeben, so ist die entstandene Polymerstruktur für die anschließenden Verfahrensschritte nicht ausreichend stabil. Dies zeigt sich beispielsweise darin, daß eine starke Temperaturänderung zu einer Verschiebung der Mittenwellenlänge und nicht zu einer Verbreiterung der Reflexionsbande führt. Werden bei der ersten Belichtung dagegen zuviele Gruppen polymerisiert, so ist der cholesterische Pitch so stark fixiert, daß die Entstehung eines Pitchgradienten unterbunden wird. Dies ist bei der konventionellen Belichtung der Fall. Damit ist eine Belichtung gemeint, bei der mehr als 70% der polymerisierbaren Moleküle polymerisiert werden.

Ermittelt wird dieser Anteil der polymerisierten Moleküle beispielsweise durch Probebelichtungen und anschließende Extraktion oder durch kalorimetrische Bestimmung der Zeitumsatzkurve.

Der Anteil der polymerisierten Moleküle wird durch die eingestrahlte Belichtungsenergie pro Flächeneinheit gesteuert. Bevorzugt wird eine möglichst kurze, intensive Belichtung. Die notwendige Belichtungsenergie hängt von der Art der verwendeten Strahlung, vom verwendeten Material, vom Photoinitiator und von der Schichtdicke ab.

Bevorzugte Belichtungsenergien pro Flächeneinheit bei der ersten Belichtung liegen im Bereich von 1 bis 500 mJ/cm² (UV-A-Bereich), besonders bevorzugt im Bereich von 10 bis 50 mJ/cm² (UV-A) . Im Vergleich dazu werden bei der konventionellen Belichtung, die zu einer Polymerisation von > 70% der polymerisierbaren Moleküle führt, Belichtungsenergien von mehr als 500 mJ/cm² angewendet.

Die Temperatur bei der die erste Belichtung durchgeführt wird kann innerhalb des cholesterischen Phasenbereichs des verwendeten Materials gewählt werden. Sie liegt vorzugsweise im Bereich von 0°C bis 200° C.

Durch diese Temperatur wird auch die Mittenwellenlänge der verbreiterten Reflexionsbande beeinflußt. Durch diese Temperaturwahl kann beispielweise bei den bevorzugten Materialien die Mittenwellenlänge im gesammten sichtbaren Spektralbereich variiert werden. Als Zeitraum für die Dunkelphase können wenige Sekunden bis mehrere Tage gewählt werden. An die Belichtung im ersten Schritt (Vorbelichtung) schließt sich als zweiter Schritt eine Dunkelphase, d. h. ein Zeitraum ohne Belichtung an.

Die Dunkelphase kann bei gleicher Temperatur wie die Belichtung im ersten Schritt oder bei einer anderen Temperatur als die Belichtung im ersten Schritt ablaufen. So ist es beispielsweise auch möglich, die Temperatur im zweiten Verfahrensschritt um bis zu ± 100° C gegenüber der Temperatur in ersten Verfahrensschritt zu ändern.

Über die Temperatur der Dunkelphase kann die Geschwindigkeit der Verbreiterung der Reflexionsbande gesteuert werden.

Eine Temperaturerhöhung führt zu einer schnelleren Verbreiterung der Reflexionsbande.

Die maximal mögliche Temperatur für die Dunkelphase ist durch den Klärpunkt der anpolymerisierten Schicht beschränkt. Vorzugsweise wird eine Temperatur zwischen der Temperatur im ersten Verfahrensschritt und diesem Klärpunkt gewählt.

Die wesentlichen Parameter zur Einstellung der gewünschten Bandbreite der Reflexionsbande des Materials mit cholesterischen Eigenschaften sind die Belichtungsenergie der Belichtung im ersten Verfahrensschritt und die Dauer und Temperatur der Dunkelphase im zweiten Verfahrensschritt.

Bei gleicher Temperatur und Dauer der Dunkelphase vergrößert sich die Breite der Reflexionsbande des LC-Materials mit abnehmender Belichtungenergie im ersten Verfahrensschritt. Andererseits führt eine längere Dauer der Dunkelphase bei gleicher Belichtungsenergie im ersten Verfahrensschritt zu einer zunehmenden Verbreiterung der Reflexionsbande des LC-Materials.

Durch die Wahl einer minimalen Vorbelichtungsenergie und einer entsprechend langen Dunkelphase lassen sich mit dem erfindungsgemäßen Verfahren Bandbreiten über 300 nm realisieren.

An die Dunkelphase schließt sich als dritter Verfahrensschritt eine zweite Belichtung mit aktinischem Licht an. Diese zweite Belichtung hat die Aufgabe, möglichst alle noch nicht polymerisierten Moleküle zu polymerisieren. Dies führt zur Fixierung und Stabilisierung der cholesterischen Schicht. Bevorzugt ist auch hier die Belichtung mit UV-Licht. Es genügen die bekannten Belichtungsenergie einer konventionellen Belichtung.

Dieser dritte Verfahrensschritt kann bei der gleichen Temperatur wie die Dunkelphase oder bei einer anderen Temperatur als die der Dunkelphase durchgeführt werden. Es gilt der für die Dunkelphase beschriebene Temperaturbereich. Wegen der Vereinfachung des Verfahrens wird diesen dritten Verfahresschritt die gleiche Temperatur wie während der Dunkelphase bevorzugt.

Die mit dem erfindungsgemäßen Verfahren hergestellten Materialien zeigen gegenüber Materialien die mit konventioneller Belichtung hergestellt wurden eine beidseitige Verbreiterung der cholesterischen Reflexionsbande um mindestens 10nm. Vorzugsweise zeigen diese Materialien eine Reflexionsbande von mehr als 100 nm Breite.

Die Erfindung betrifft somit auch photopolymerisierte cholesterische Flüssigkristalle mit um mindestens 10 nm gegenüber mit konventioneller Belichtung hergestellten photopolymerisierten cholesterischen Flüssigkristallen mit verbreiterter cholesterischer Reflexionsbande die nach dem erfindungsgemäßen Verfahren hergestellt sind.

Der größte Pitch tritt beim erfindungsgemäßen Material auf der der Belichtungslampe zugewandten Seite des Materials auf.

Das erfindungsgemäße Verfahren ist auch für Reflexionsbanden im nahen UV und im infraroten Spektralbereich anwendbar. Hierzu werden gegebenfalls Materialien verwendet, deren Mittenwellenlänge in diesem Spektralbereich liegt.

Für die industrielle Realisierung ist es wünschenswert, daß das erfindungsgemäße Verfahren für einen kontinuierlichen Herstellprozeß an einer Beschichtungsmaschine geeignet ist.

Eine solches kontinuierliches Herstellungsverfahren läuft vorzugsweise folgendermaßen ab: Eine mit einem polymerisierbaren Flüssigkristall beschichtete Trägerfolie, die mit einer Deckfolie kaschiert ist, wird in einem ersten Verfahrensschritt bei einer definierten Temperatur einer ersten kurzen Belichtung unterworfen die wie bereits ausgeführt zur Teilpolymerisation des polymerisierbaren Materials führt. Aufgrund der kurzen Belichtungszeit kann bei diesem Verfahrensschritt ein hoher Materialdurchsatz erreicht werden.

Für wenig verbreiterte Reflexionsbanden erfolgt der zweite Verfahrensschritt (die Dunkelphase) über einen entsprechend kurzen Zeitraum und der dritte Verfahrensschritt (die zweite Belichtung) schließt sich sogleich an. Vorteilhafterweise können dabei alle Verfahrensschritte in einem Durchgang ausgeführt werden.

Für sehr breite Reflexionsbanden kann gegebenenfalls eine längere Dauer des zweiten Verfahrensschrittes (der Dunkelphase) notwendig sein. Hier bietet sich eine Zwischenlagerung der belichteten Folie gegebenfalls bei einer von der Temperatur des ersten Verfahrensschrittes verschiedenen Temperatur an. Anschließend wird im dritten Verfahrensschritt die zweite Belichtung in an sich bekannter Art und Weise durchgeführt und das Material endgültig stabilisiert. Dabei kann dieser separat durchgeführte dritte Verfahrensschritt gegebenenfalls mit weiteren Prozesschritten wie beispielsweise dem Aufbringen einer Klebeschicht kombiniert werden. Diese Vorgehensweise gewährleistet trotzt der Zwischenlagerung einen hohen Materialdurchsatz, da die Maschinendurchläufe wegen der kurzen Belichtungszeiten mit hoher Geschwindigkeit erfolgen können.

Das erfindungsgemäße Verfahren eignet sich z.B. auch zur Herstellung photostrukturierter cholesterischer Filter und Reflektoren mit verbreiterten Reflexionsbanden. Dazu wird das Verfahren wie oben beschrieben durchgeführt mit dem Unterschied, daß zumindest die Belichtungen des Materials (die erfindungsgemäßen Verfahrensschritte 1 und 3) durch eine Maske erfolgen. Anschließend wird die erste Maske verschoben oder durch eine zweite Maske ersetzt und die erfindungsgemäßen Verfahrensschritte 1 bis 3 unter Änderung mindestens eines Parameters der Schritte 1 oder 2 so wiederholt, daß ein noch nicht belichteter Teil des Materials bestrahlt wird.

Unter Änderung mindestens eines Parameters der Schritte 1 oder 2 ist zu verstehen, daß bei der Wiederholung des Verfahrens mittels einer anderen Temperatur bei der Belichtung im ersten Verfahrensschritt eine andere Reflexionsfarbe für den nun bestrahlten Materialbereich eingestellt wird oder durch entsprechende Auswahl von Temperatur oder Dauer der Dunkelphase im zweiten Verfahrensschritt die Bandbreite der Reflexionsbande für den nun bestrahlten Materialbereich jeweils erwünscht eingestellt wird.

Gegebenenfalls wird das Verfahren noch so oft als erforderlich mit noch nicht belichteten Bereichen des Materials wiederholt. Auf diese Art und Weise läßt sich ein mehrfarbiger photostrukturierter Filter bzw. Reflektor erzeugen, dessen Einzelfarben über die jeweilige Wahl der Mittenwellenlänge und der Bandbreite der Reflexionsbande frei einstellbar sind.

Im einzelnen kann beispielsweise auch wie folgt vorgegangen werden:
1. Photostrukturierte Materialien enthaltend Reflexionsbanden unterschiedlicher Bandbreite und gleicher Mittenwellenlängen werden erhalten, wenn das cholesterische Material
   a) für die einzelnen Strukturen im jeweils ersten Verfahrensschritt bei gleicher Temperatur mit unterschiedlicher Vorbelichtungsdosis belichtet wird und die weiteren Verfahrensschritte jeweils bei gleicher Temperatur und gleicher Dauer der Dunkelphase durchgeführt werden oder
   b) für die einzelnen Strukturen im jeweils ersten Verfahrensschritt bei gleicher Temperatur mit gleicher Vorbelichtungsdosis belichtet wird und die weiteren Verfahresschritte für die jeweilige Struktur bei unterschiedlichen Temperaturen und/oder Dauer der Dunkelphasen durchgeführt werden.
2. Photostrukturierte Materialien enthaltend Reflexionsbanden unterschiedlicher Bandbreite und unterschiedlicher Mittenwellenlänge werden erhalten, wenn das cholesterische Material
   a) für die einzelnen Strukturen im jeweils ersten Verfahrensschritt bei unterschiedlichen Temperaturen mit jeweils unterschiedlicher Vorbelichtungsdosis belichtet wird und die weiteren Verfahrensschritte jeweils bei gleicher Temperatur und gleicher Dauer der Dunkelphase duchgeführt werden oder
   b) für die einzelnen Strukturen im jeweils ersten Verfahrensschritt bei unterschiedlichen Temperaturen mit gleicher Vorbelichtungsdosis belichtet wird und die weiteren Verfahrensschritte für die jeweilige Struktur bei unterschiedlichen Temperaturen und/oder Dauer der Dunkelphasen durchgeführt werden.
3. Photostrukturierte Materialien enthaltend Reflexionsbanden gleicher Bandbreite und unterschiedlicher Mittenwellenlänge werden erhalten, wenn das cholesterische Material für die einzelnen Strukturen im jeweils ersten Verfahrensschritt bei unterschiedlichen Temperaturen mit gleicher Vorbelichtungsdosis belichtet wird und die weiteren Verfahrensschritte jeweils bei gleicher Temperatur und gleicher Dauer der Dunkelphase durchgeführt werden.

Je nach tatsächlich gewähltem System ist gegebenfalls eine Optimierung der Anfangsdosis sowie der Dauer und Temperatur der Dunkelphase erforderlich.

Zur Beschleunigung und Vereinfachung des Herstellprozesses können gleiche Verfahrensschritte für die verschiedenen Strukturen anstatt örtlich und/oder zeitlich getrennt gegebenenfalls auch örtlich und/oder zeitlich gemeinsam durchgeführt werden.

Durch die mit dem erfindungsgemäßen Verfahren mögliche Kontrolle der Mittenwellenlänge und der Breite der Reflexionsbande lassen sich in einfacher Weise die gewünschten photometrischen Eigenschaften von optischen Elementen wie Polarisatoren, Farbfiltern Pigmente oder Reflektoren, insbesondere auch von strukturierten Filtern und Reflektoren für links oder rechts zirkular polarisiertes Licht, einstellen.

Ebenfalls Gegenstand der Erfindung sind daher optische Elemente z.B. Filter, Reflektoren und Polarisatoren, die Schichten enthaltend Materialien mit cholesterischen Eigenschaften umfassen, die nach dem erfindungsgemäßen Verfahren hergestellt wurden.

Vorzugsweise haben die erfindungsgemäßen optischen Elemente cholesterische Reflexionsbanden von mehr als 100 nm Bandbreite.

Als optisches Element ist die erfindungsgemäße Schicht mit cholesterischer Reflexionsbande zusammen mit den Substraten in Form eines Laminats oder als einseitig offene Schicht oder nach Entfernen des oder der Substrate auch als freier Film geeignet.

Auf diese Schicht bzw. Laminate können weitere cholesterische Einzelschichten oder auch andere Schichten, beispielsweise Verzögerungsfolien (z.B. eine λ/4-Verzögerungsschicht ) absorptiv arbeitende Polarisationsfolien, Farbfolien oder eine Klebeschicht, aufgebracht werden.

Es ist jedoch auch möglich optische Elemente wie Filter, Reflektoren und Polarisatoren mittels des erfindungsgemäßen Verfahrens herzustellen, bei denen als Trägersubstrat für das photopolymerisierbare LC-Material eine λ/4-Verzögerungsschicht eingesetzt wird.

Unter λ/4-Verzögerungsschicht ist eine Schicht zu verstehen, die möglichst im gesamten, vom optischen Element benutzten Wellenlängenbereich den Verzögerungswert 0,25 mal der jeweiligen Wellenlänge besitzt.

Als optisches Element ist die erfindungsgemäße Schicht auch in zerkleinerter Form als Plättchen geeignet. In EP 0 601 483 A1 ist beschrieben, wie cholesterische Pigmente, die sichtbares Licht reflektieren, durch Ablösen eines polymerisierten cholesterischen Films vom Substrat und anschließendes Zerkleinern der so gewonnenen Rohschollen hergestellt werden können.

In analoger Weise können aus den erfindungsgemäßen Filmen cholesterische Plättchen mit verbreiterter Reflexionsbande hergestellt werden. Solche cholesterischen Pigmente zeigen aufgrund ihrer breiteren Reflexionsbande eine höhere Lichtreflexion und erreichen deshalb eine bessere Brillanz. Darüberhinaus können mit gezielt verbreiteren Reflexionsbanden neue Farbtöne und Effekte erzielt werden. Interessant sind auch cholesterische Pigmente, deren Reflexionsbande den gesamten sichtbaren Spektralbereich abdeckt. Sie können aus einem erfindungsgemäßen cholesterischen Breitbandfilm in analoger Weise hergestellt werden. Solche hochreflektierende farbneutrale Pigmente sind beispielsweise zum Erzielen metallischer Effekte geeignet.

Durch geeignete Einstellung der langwelligen Reflexionskante können diese farbneutralen Pigmente bei der Betrachtung unter einem vom Lot abweichenden Winkel auch farbig erscheinen.

Die Pigmente können anschließend analog EP 0 685 749 A1 in ein geeignetes Bindemittelsystem eingearbeitet werden. Bevorzugt sind Bindemittelsysteme, die nach dem Aushärten im sichtbaren Licht farblos erscheinen und dem mittleren Brechungsindex der cholesterischen Plättchen ähnlich sind. Dazu werden die cholesterischen Plättchen in das noch flüssige Bindemittel eingerührt. Die Orientierung der Plättchen parallel zur Oberfläche geschieht wie beispielsweise in EP 0 685 749 A1 beschrieben beim Auftragen einer dünnen Schicht des Pigment-Bindemittelgemischs auf ein Substrat oder bei der Extrusion des Gemischs. Abhängig von der jeweiligen Anforderung kann der Film nach dem Aushärten des Bindemittels vom Substrat abgelöst werden oder mit weiteren Schichten kombiniert werden.

Ebenfalls Gegenstand dieser Erfindung sind Vorrichtungen, die die nach dem erfindungsgemäßen Verfahren hergestellten Schichten als Filter, Reflektoren oder Polarisatoren enthalten. Solche Vorrichtungen sind beispielsweise Projektoren, Projektionsdisplays und Flüssigkristallanzeigen.

Beispielsweise kann ein nach diesem Verfahren hergestellter Breitbandpolarisator als reflektiver Polarisator in der Belichtungseinheit eines Flüssigkristalldisplays verwendet werden. Damit kann die Lichtausbeute der Flüssigkristallanzeige um bis zu 100% verbessert werden.

Die folgenden Beispiele dienen der weiteren Erläuterung der Erfindung:

### Ausgangsmaterialien:

Allen nachfolgend aufgeführten Substanzen wurden 2 Gew% des Photoinitiators Irgacure-907 (Ciba-Geigy AG, Schweiz) zugemischt.

### Substanz 1 (TCblau)

Substanz 1 wurde gemäß Beispiel 1a) in EP 0 661 287 (entspricht Beispiel 1a) in US-A-5,605,649) hergestellt.

### Substanz 2 (96.2% TC blau + 3.8% ABIS)

Substanz 2 wurde durch Mischung aus 96.2 Gew% Substanz 1 mit 3.8 Gew% der chiralen Komponente Isosorbid-bis(4-allyloxybenzoat) erhalten. Diese chirale Komponente wurde folgendermaßen hergestellt: 24 mmol Isosorbid und 48 mmol eines ω-Propenyloxybenzoylchlorids werden im 40 mmol Toluol gelöst und 12 Stunden zum Rückfluß erhitzt. Das Toluol wird im Vakuum abdestilliert und das Rohprodukt aus Ethanol bzw. Isopropanol umkristallisiert.

### Substanz 3 (50% TCblau + 50% TCrot)

Substanz 3 wurde durch Mischung von Substanz 1 und einem weiteren linkshelikalen Oligomer, das nach Beispiel 1b) von EP 0 661 287 (entspricht Beispiel 1b) in US-A-5,605,649) hergestellt wurde, im Verhältnis 1:1 erhalten.

### Substanz 4 (74.3% CCblau + 17.1% Machol + 8.6% MAABH)

Substanz 4 wurde durch Mischung von 74.3 Gew.% des nach Beispiel 1A der in DE 42 40 743 (entspricht Beispiel 1A von US-A-5362315) erhaltenen cholesterischen Oligomers mit 17.1 Gew% Methacrylsäurecholesterinester und 8.6 Gew.% 4-Allyloxybenzoesäure-(4-methacryloyloxyphenyl)ester erhalten.

### Substanz 5 (77.7% CCblau rh + 19.4% MAHBEP + 2.9% ABIM)

Die Substanz 5 wurde durch Mischung von 19.4 Gew.% (4-Methacryloyloxy)benzoesäure-4'-ethylphenylester mit 2.9 Gew.% Isomannid-bis(4-allyloxybenzoat) und 77.7 Gew.% eines rechtshelikalen cholesterischen Oligomers hergestellt, das wie in Beispiel 2 in DE 4234845 (entspricht Beispiel 2 von US Ser.Nr. 08/406,978) beschrieben erhalten wurde:
2,78 g 4-(Propen-2-oxy)benzoesäuredoristerylester (CAS-Nr.: 159235-15-1), 0,88 g
4-(Propen-2-oxy)benzoesäure-4'-(4"-methoxyphenylcarbonyloxy)phenylester (hergestellt nach üblichen Darstellungsverfahren) und 0,95 g Tetramethylcyclotetrasiloxan wurden in 20 ml trokkenem Toluol gelöst und nach Zugabe von 46 *µ*l einer Lösung von Dicyclopentadienplatindichlorid (1 Gew.-% in Methylenchlorid) 1,5 h auf 100°C erwärmt. Zu der auf 50°C abgekühlten Lösung gab man 2,46 g
4-(Propen-2-oxy)benzoesäure-(4'-methacryloyloxy)phenylester (CAS-Nr.: 159235-16-2), 500 ppm Q1301 (alternativ: 3000 ppm
2,6-Di-tert.-butyl-4-methylphenol) und weitere 27*µ*l der Katalysatorlösung. Diese Lösung wurde zwei Stunden bei 70-80°C gerührt. Nach beendeter Reaktion wurde mit 150 mg Natriumhydrogencarbonat ausgerührt, filtriert und das Produkt aus Ethanol umgefällt.

Die Darstellung von Isomannid - bis (4-allyloxybenzoat)erfolgte folgendermaßen: 24 mmol Isomannid und 48 mmol eines ω-Propenyloxybenzoylchlorids werden in 40 mmol Toluol gelöst und 12 Stunden zum Rückfluß erhitzt. Das Toluol wird im Vakuum abdestilliert und das Rohprodukt aus Ehtanol bzw. Isopropanol umkristallisiert.

### Ausführungsbeispiele

Die Herstellung der Filme wurde, wenn nichts anderes vermerkt, folgendermaßen durchgeführt:
Zwei Glasplatten wurden mit einer Orientierungsschicht aus Polyimid versehen, die mit einem Samttuch unidirektionell gerieben wurde. Eine kleine Menge der Substanz wurde in Schmelze bei einer jeweils angegebenen Temperatur auf die Orientierungsschicht einer der Platten aufgetragen und mit der zweiten Platte abgedeckt. Die Glasplatten wurden über eine kleine Distanz geschert, um eine gute makroskopische Orientierung zu erzielen. Als Belichtungsquelle wurde eine Quecksilberbogenlampe (Model 68810, L.O.T.-Oriel GmbH) verwendet, deren Shutter mit einer Zeitschaltuhr angesteuert werden kann. Die Belichtungsleistungen im UV-A-Bereich wurden mit einem UV Power Puck (Fa. EIT Inc, USA) gemessen. Die resultierenden Reflexions- und Transmissionspektren wurde mit dem UV-VIS Spektrometer Lambda 19 von Perkin Elmer bestimmt. Für die Messungen im zirkularpolarisierten Strahlengang wurde als achromatischer zirkular polarisierender Analysator eine Kombination aus Fresnelrhombus und Glan-Thompson Polarisator verwendet.

### Ausführungsbeispiel 1

A) Die Ausgangssubstanz 1 wurde wie oben beschrieben durch Schmelzpräparation bei 90°C zwischen zwei Polyimid beschichteten Glasplatten gebracht, geschert und bei 90°C für 0,8 Sekunden mit 33mW/cm² (UV-A) belichtet . Die Schichtdicke des Materials betrug 15 *µ*m. Nach einer Wartezeit von 30 min bei 90°C im Dunkeln erfolgte die zweite Belichtung bei ebenfalls 90°C mit einer Leistung von 33mW/cm² (UV-A), diesmal für die Dauer von 60 s.
   Die Bandbreite der Transmissionsbande im Plateau (d.h. der 90%-Wert der minimalen Transmission) beträgt 68 nm.
B) Aus der Substanz 2 wurde wie im Beispiel 1A) beschrieben eine Schicht präpariert und nach den selben Verfahrenschritten belichtet. Es ergibt sich eine Bandbreite von 120 nm.
C) Aus der Substanz 3 wurde wie im Beispiel 1A) beschrieben eine Schicht präpariert und nach den selben Verfahrenschritten belichtet. Es ergibt sich eine Bandbreite von 107 nm.
D) Aus der Substanz 4 wurde wie im Beispiel 1A) beschrieben eine Schicht präpariert und nach den selben Verfahrenschritten belichtet. Es ergibt sich eine Bandbreite von 83 nm.
E) Aus der Substanz 5 wurde wie im Beispiel 1A) beschrieben eine Schicht präpariert. Es wurden die selben Verfahrensschritte wie in Beispiel A) durchgeführt mit dem einzigen Unterschied, daß die Belichtungen und die Dunkelphase bei 85°C statt bei 90°C durchgeführt wurden. Es ergibt sich eine Bandbreite von 93 nm.

### Vergleichsbeispiel 1

A) Die Ausgangssubstanz 1 wurde wie oben beschrieben durch Schmelzpräparation bei 90°C zwischen zwei Polyimid beschichteten Glasplatten gebracht und geschert. Die Schichtdicke betrug 15*µ*m. Diese Schicht wurde bei 90°C für 60 sec mit 33mW/cm² (UV-A) konventionell bestrahlt. Das heißt, daß nur eine einmalige Belichtung, jedoch mit großer Belichtungsenergie, durchgeführt wurde. Es wird in Transmission eine Bandbreite von 34 nm gemessen.
B) Aus der Substanz 2 wurde wie im Vergleichsbeispiel 1A) beschrieben eine Schicht präpariert und nach dem selben Verfahrenschritt belichtet. Es ergibt sich eine Bandbreite von 39 nm.
C) Aus der Substanz 3 wurde wie im Vergleichsbeispiel 1A) beschrieben eine Schicht präpariert und nach dem selben Verfahrenschritt belichtet. Es ergibt sich eine Bandbreite von 30 nm.
D) Aus der Substanz 4 wurde wie im Vergleichsbeispiel 1A) beschrieben eine Schicht präpariert und nach dem selben Verfahrenschritt belichtet. Es ergibt sich eine Bandbreite von 27 nm.
E) Aus der Substanz 5 wurde wie im Vergleichsbeispiel 1A) beschrieben eine Schicht präpariert und bei 85°C für 60s mit 33mW/cm² (UV-A) belichtet. Es ergibt sich eine Bandbreite von 45 nm.

Die Mittenwellenlängen und Breiten der Reflexionsbanden aus den Ausführungsbeispielen 1A bis 1E und den entsprechenden Vergleichsbeispielen 1A bis 1E sind in Tabelle 1 gegenübergestellt.

Auch die aus nur einer Komponente, einem cholesterischen Oligomer, bestehende Substanz 1 zeigt eine Verbreiterung der Reflexionsbande. Die ersten vier Substanzen sind linkshelikale Mischungen, während es sich bei der Substanz 5 um eine rechtshelikale Mischung handelt. Auch hier wird bei der Anwendung des erfindungsgemäßen Verfahrens eine Verbreiterung der Reflexionsbande beobachtet.

**Tabelle 1:**

| | Substanz | Mittenwellenlänge [nm] | Bandbreite bei konv. Bel. [nm] | verbreiterte Bande [nm] |
|---|---|---|---|---|
| Vergleichsbeispiel 1A | 1 | 386 | 34 | |
| Ausführungsbeispiel 1A | 1 | 386 | | 68 |
| Vergleichsbeispiel 1B | 2 | 504 | 39 | |
| Ausführungsbeispiel 1B | 2 | 504 | | 120 |
| Vergleichsbeispiel 1C | 3 | 490 | 30 | |
| Ausführungsbeispiel 1C | 3 | 490 | | 107 |
| Vergleichsbeispiel 1D | 4 | 443 | 27 | |
| Ausführungsbeispiel 1D | 4 | 443 | | 83 |
| Vergleichsbeispiel 1E | 5 | 445 | 45 | |
| Ausführungsbeispiel 1E | 5 | 445 | | 93 |

### Ausführungsbeispiel 2

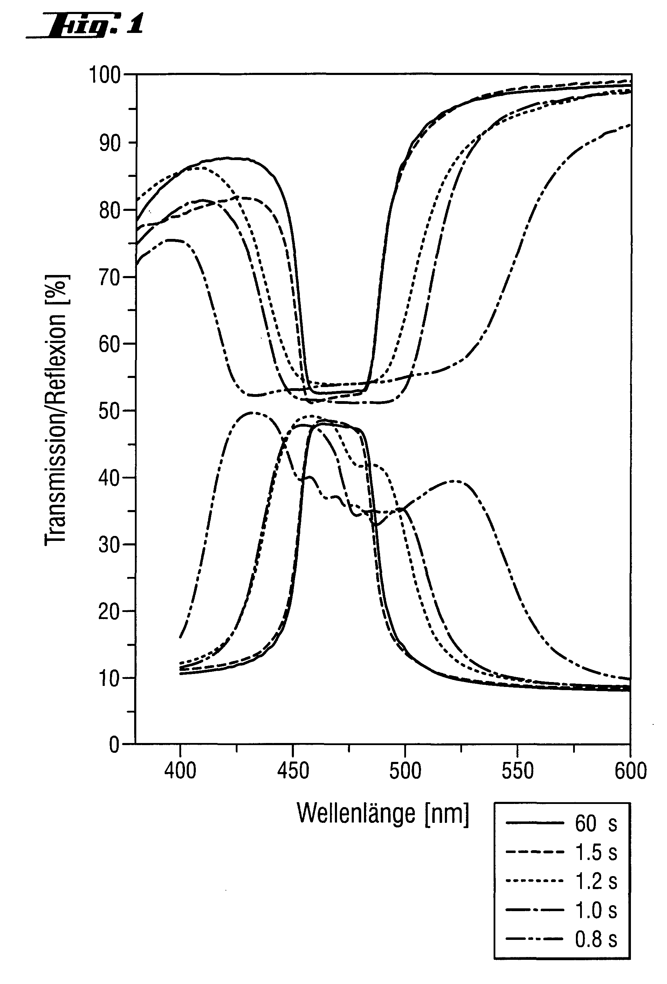

A) Eine kleine Menge der Substanz 2 wurde in Schmelze bei 96°C wie oben beschrieben zwischen zwei mit Polyimid beschichteten Glasplatten präpariert. Die Schichtdicke betrug 12*µ*m. Die erste Belichtung bei 96°C dauerte 1,5 sec bei einer Belichtungsleistung von 33 mW/cm2 (UV-A Bereich). Nach der Belichtung wurde der Film innerhalb von 5 min auf 70°C heruntergekühlt. Nach einer Wartezeit von 20 min bei 70°C erfolgte die zweite Belichtung mit ebenfalls 33 mW/cm2 (UV-A), diesmal für die Dauer von 10 s.
   Die Messung im unpolarisierten Strahlengang mit dem UV-VIS Spektrometer ergab die in Fig. 1 dargestellte Reflexions- und zugehörigen Transmissionsbande. Die Bandbreite der Transmissionsbande im Plateau (d.h. der 90%-Wert der minimalen Transmission) beträgt 32 nm.
B) Eine Schicht wurde wie im Beispiel 2A) präpariert und nach den selben Verfahrenschritten wie in Beispiel 2A) belichtet mit dem einzigen Unterschied, daß die Zeitdauer für die erste Belichtung 1,2 sec betrug.
   Die zugehörige Reflexions- und Transmissionsbande ist ebenfalls in Fig.1 dargestellt. Es ergibt sich eine Bandbreite von 48 nm.
C) Eine Schicht wurde wie im Beispiel 2A) präpariert und nach den selben Verfahrenschritten wie in Beispiel 2A) belichtet mit dem einzigen Unterschied, daß die Zeitdauer für die erste Belichtung 1 sec betrug. Die zugehörige Reflexions- und Transmissionsbande ist ebenfalls in Fig.1 dargestellt. Es ergibt sich eine Bandbreite von 59 nm.
D) Eine Schicht wurde wie im Beispiel 2A) präpariert und nach den selben Verfahrenschritten wie in Beispiel 2A) belichtet mit dem einzigen Unterschied, daß die Zeitdauer für die erste Belichtung 0,8 sec betrug. Die zugehörige Reflexions- und Transmissionsbande ist ebenfalls in Fig.1 dargestellt. Es ergibt sich eine Bandbreite von 108 nm.

### Vergleichsbeispiel 2

Zum Vergleich wurde aus der Substanz 2 wie im Ausführungsbeispiel 2 beschrieben eine Schicht mit 12 *µ*m Dicke präpariert. Diese Schicht wurde bei 96°C für 60 sec mit 33mW/cm² (UV-A) konventionell bestrahlt. Das heißt, daß nur eine einmalige Belichtung, jedoch mit großer Belichtungsenergie, durchgeführt wurde. Die zugehörige Reflexions- und Transmissionsbande ist zum Vergleich ebenfalls in Fig.1 dargestellt. Die erzielte Bandbreite beträgt 29 nm.

Die Daten des Ausführungsbeispiel 2 und des Vergleichsbeispiel 2 sind in der Tabelle 2 zusammengefaßt: Die Belichtungsenergie ergibt sich aus dem Produkt der Belichtungsleistung (im UV-A Bereich) mal der Belichtungszeit.

**Tabelle 2**

| | 1.Belichtung [s] | Belichtungsenergie bei 1. Belichtung [mJ/cm²] | Bandbreite [nm] |
|---|---|---|---|
| Vergleichsbeispiel 2 | 60 | 1.980 | 29 |
| Ausführungsbeispiel 2A) | 1,5 | 49,5 | 32 |
| Ausführungsbeispiel 2B) | 1,2 | 39,6 | 48 |
| Ausführungsbeispiel 2C) | 1 | 33 | 59 |
| Ausführungsbeispiel 2D) | 0,8 | 26,4 | 108 |

### Ausführungsbeispiel 3

A) Es wurde mit der Substanz 2 eine Schicht wie im Ausführungsbeispiel 2 beschrieben präpariert. Die Schichtdicke betrug 12 *µ*m. Die erste Belichtung mit 33mW/cm² (UV-A) wurde bei 96°C und mit einer Belichtungszeit von 0,8 sec durchgeführt. Nach einer Wartezeit von 1 min bei 96°C erfolgte die zweite Belichtung (96°C, 33mW/cm², für 10 sec). Es ergibt sich eine Bandbreite von 36 nm.
B) Eine Schicht wurde wie im Beispiel 3A) präpariert und nach den selben Verfahrenschritten wie im Beispiel 3A) belichtet mit dem einzigen Unterschied, daß die Wartezeit bei 96°C 4 min betrug. Es ergibt sich eine Bandbreite von 60 nm.
C) Eine Schicht wurde wie im Beispiel 3A) präpariert und nach den selben Verfahrenschritten wie in Beispiel 3A) belichtet mit dem einzigen Unterschied, daß die Wartezeit bei 96°C 7 min betrug. Es ergibt sich eine Bandbreite von 86 nm.
D) Eine weitere Schicht wurde wie im Beispiel 3A) präpariert und nach den selben Verfahrenschritten wie in Beispiel 3A) belichtet mit dem einzigen Unterschied, daß die Wartezeit bei 96°C 15 min betrug. Es ergibt sich eine Bandbreite von 115 nm.

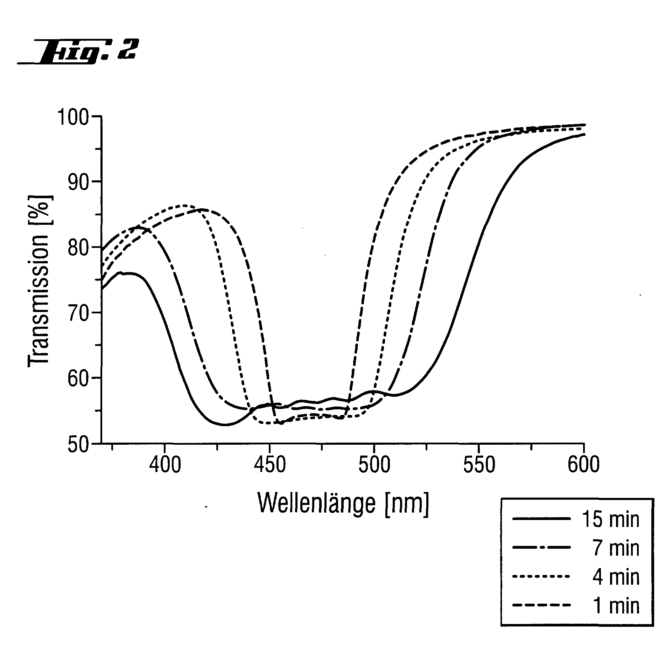

Die Daten und die resultierenden Transmissionsbanden im unpolarisierten Strahlengang für die Ausführungsbeispiele 3A) bis 3D) sind in Tabelle 3 und Fig. 2 dargestellt. Mit zunehmender Wartezeit nimmt auch die Verbreiterung der Reflexionsbande zu.

**Tabelle 3**

| | erste Belichtung [s] | Dunkelphase [min] | Bandbreite [nm] |
|---|---|---|---|
| Ausführungsbeispiel 3A) | 0,8 | 1 | 36 |
| Ausführungsbeispiel 3B) | 0,8 | 4 | 60 |
| Ausführungsbeispiel 3C) | 0,8 | 7 | 86 |
| Ausführungsbeispiel 3D) | 0,8 | 15 | 115 |

Die folgenden drei Ausführungsbeispiele zeigen, wie mit Hilfe des erfindungsgemäßen Verfahrens bei Verwendung des gleichen Materials die Mittenwellenlänge und die Bandbreite unabhängig voneinander eingestellt werden kann.

### Ausführungsbeispiel 4

Eine Schicht aus Substanz 2 wurde wie im Ausführungsbeispiel 2 beschrieben präpariert und bei 96°C für 0,8 sec belichtet, anschließend für 4 min bei 96°C getempert und schließlich bei 96°C für 10 sec. mit 33 mW/cm² belichtet. Die Mittenwellenlänge der Reflexionsbande des so behandelten Materials liegt bei 468 nm. Die Bandbreite der Reflexionsbande des so behandelten Materials beträgt 60 nm und ist um 25nm breiter als eine bei 96°C konventionell hergestellte Probe aus dem selben Material.

### Ausführungsbeispiel 5

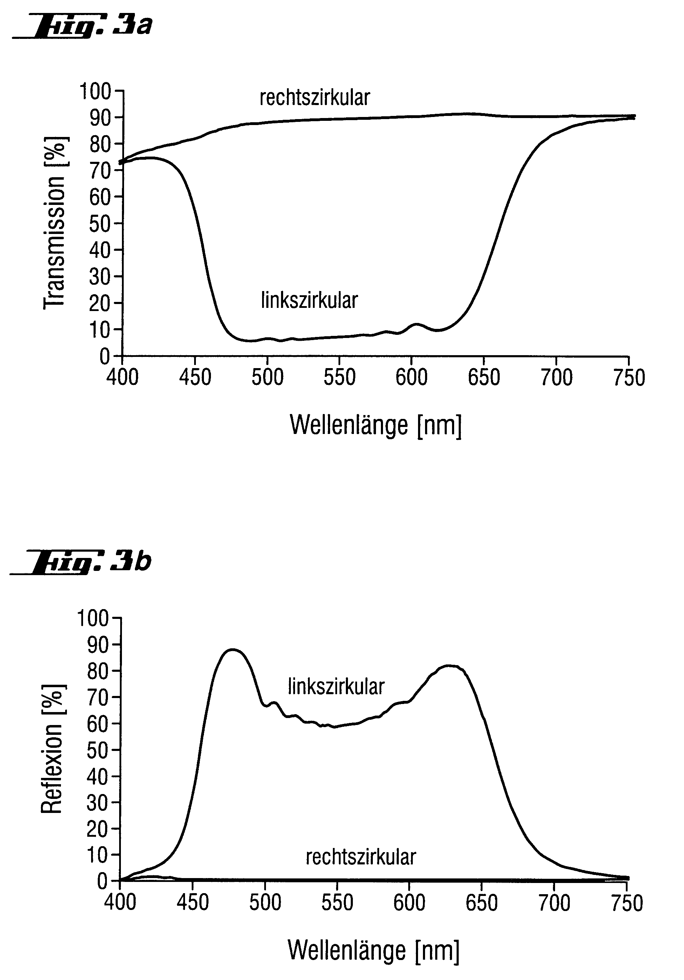

Eine Schicht aus Substanz 2 wurde wie im Ausführungsbeispiel 2A beschrieben präpariert und nach dem Scheren bei 96°C auf 70°C abgekühlt. Bei dieser Temperatur wurde die erste Belichtung mit 33mW/cm² für die Dauer von 0,6 sec durchgeführt. Anschließend wurde die Probe mit 5°C/min auf 100°C aufgeheizt und bei dieser Temperatur für 20 min getempert. Bei 100°C wurde auch die zweite Belichtung (10 sec. mit 33mW/cm²) durchgeführt.
Es ergibt sich für die Reflexionsbande des so behandelten Materials eine Mittenwellenlänge von 550 nm, die Bandbreite der Reflexionsbande beträgt etwa 160 nm. Die optischen Eigenschaften der nach dem erfindungsgemäßen Verfahren hergestellten Schichten sind in Fig. 3 verdeutlicht. Diese Abbildung zeigt die Transmission und Reflexion im links- und rechtszirkularen Strahlengang. Das Verhältnis aus rechtszirkularer und linkszirkularer Transmission ist besser als 10:1. Das Verhältnis von linkszirkularer zu rechtszirkularer Reflexion ist besser als 100:1.

### Ausführungsbeispiel 6

Eine Schicht aus Substanz 2 wurde wie im Ausführungsbeispiel 2A beschrieben präpariert und nach dem Scheren bei 96°C auf 45°C abgekühlt. Die erste Belichtung (33mW/cm², für 3 sec) erfolgte nach einer 15 minütigen Temperzeit bei 45°C. Anschließend wurde die Probe mit etwa 5°C/min auf 100°C aufgeheizt. Daran schloß sich eine Wartezeit von 5 min an, bevor die Probe zum zweiten Mal belichtet wurde (33 mW/cm², für 60 sec). Durch die niedrigere Ausgangstemperatur bei der ersten Belichtung liegt die Mittenwellenlänge bei 630 nm. Die Bandbreite beträgt etwa 115 nm.

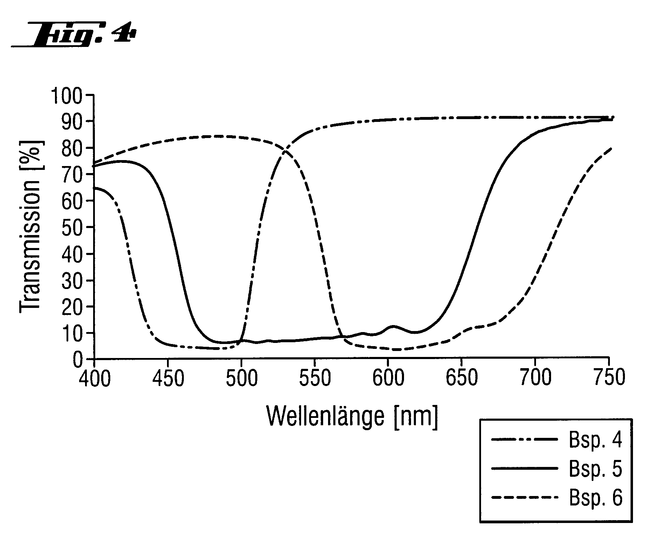

Die Daten der Ausführungsbeispiele 4, 5 und 6 sind in Tabelle 4 zusammengefaßt: Die zugehörigen Transmissionsspektren im linkszirkularen Strahlengang sind in Fig. 4 dargestellt.

**Tabelle 4**

| | 1. Belichtung | Dunkelphase | 2. Belichtung | Mittenwellenlänge | Bandbreite |
|---|---|---|---|---|---|
| Ausführungsbeispiel 4 | 0,8 s 96°C | 4 min 96°C | 10s 96°C | 468 nm | 60 nm |
| Ausführungsbeispiel 5 | 0,6 s 70°C | 20 min 100°C | 10s 70°C | 550 nm | 160 nm |
| Ausführungsbeispiel 6 | 3 s 45°C | 5 min 100°C | 60s 100°C | 630 nm | 115 nm |

Die beiden folgenden Ausführungsbeispiele zeigen, wie mit Hilfe des erfindungsgemäßen Verfahrens Reflexionsbanden erzeugt werden, die den gesamten sichtbaren Spektralbereich abdecken:

### Ausführungsbeispiel 7

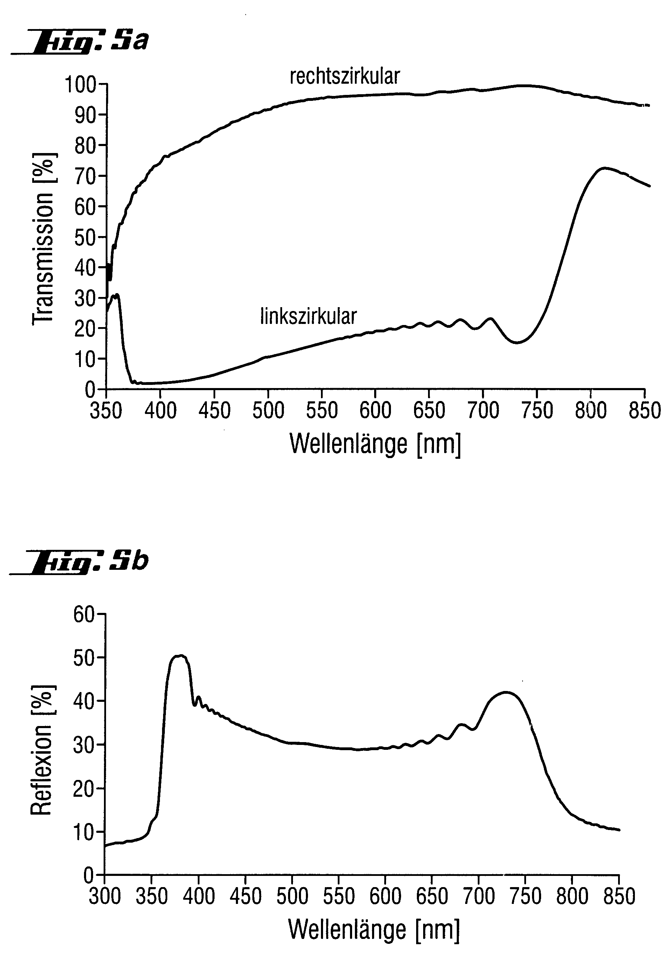

Eine Schicht aus Substanz 2 wurde bei 96°C wie in Beispiel 2A beschrieben präpariert und anschließend auf 85°C abgekühlt. Die Schichtdicke betrug 30*µ*m. Die erste Belichtung erfolgte für 0,8 sec bei 85°C mit 33 mW/cm² (UV-A). Anschließend wurde die cholesterische Schicht auf 100°C aufgeheizt. Nach einer Wartezeit von 120 min bei 100°C erfolgte die zweite Belichtung mit 33 mW/cm² UV-A bei 100°C für die Dauer von 60 s.
Die resultierende Reflexions- und Transmissionsbanden sind in Fig. 5 wiedergegeben. Die Reflexionsbande erstreckt sich von 370 nm bis 750 nm.

### Ausführungsbeispiel 8

Aus Substanz 3 wurde bei 95°C wie in Beispiel 2A beschrieben eine Schicht präpariert. Die Schichtdicke betrug 20 *µ*m. Nach Abkühlen der Probe auf 85°C wurde die cholesterische Schicht für 0,8 sec mit 33 mW/cm² UV-A belichtet, auf 95°C aufgeheizt und anschließend bei dieser Temperatur für 120 min getempert. Die zweite Belichtung erfolgte bei 95°C mit 33 mW/cm² UV-A für die Dauer von 60 s.

Die resultierende Reflexionsbande erstreckt sich von 360 bis 700 nm.

### Ausführungsbeispiel 9:

Es wurde wie im Ausführungsbeispiel 1D) beschrieben ein erfindungsgemäßer Film zwischen Glasplatten hergestellt. Die Mittenwellenlänge lag bei 443 nm, die Breite der Reflexionsbande betrug 83 nm. Anschließend wurden die Glasplatten auseinandergesprengt. Der cholesterische Film wurde mit einer Messerklinge vom Glassubstrat abgeschabt. Die verbleibenden Partikel wurden bis zu einem mittleren Korndurchmesser von etwa 100 *µ*m gemahlen und mit einem Klarlack im Verhältnis 1:10 Gewichtsteilen gemischt. Als Klarlack wurde ein Zweikomponenten-Decklack auf Polyurethanbasis (Standox, Fa. Herberts) verwendet. Das Lackgemisch wurde mit Hilfe eines Filmziehgeräts in einer Naßfilmdicke von 120 *µ*m auf einen schwarzen Karton aufgerakelt und bei 80° für eine Stunde getrocknet. Der resultierende Karton zeigt eine blaugrüne Färbung hoher Brillanz, die sich mit zunehmenden Blickwinkel nach Blau verschiebt.

## Patentansprüche

1. Verfahren zur Verbreiterung der cholesterischen Reflexionsbanden von photopolymerisierbaren cholesterischen Flüssigkristallen **dadurch gekennzeichnet**, daß es die folgenden drei Verfahrensschritte umfaßt:
1) teilweises polymerisieren einer Schicht enthaltend photopolymerisierbare cholesterische Flüssigkristalle durch eine definierte kurzzeitige Belichtung mit aktinischem Licht bei einer definierten Temperatur,
2) einhalten einer definierten Wartezeit ohne Belichtung (Dunkelphase) bei einer definierten Temperatur
3) fixieren der so erhaltenen Schicht durch Belichtung mit aktinischem Licht bei einer definierten Temperatur.

2. Verfahren nach Anspruch 1, **dadurch gekennzeichnet**, daß das photopolymerisierbare Material mit cholesterischen Eigenschaften ausgewählt ist aus der Gruppe cholesterische Monomere, Oligomere oder Polymere, Mischungen aus cholesterischen Monomeren, Oligomeren oder Polymeren mit chiralen Monomeren, Mischungen aus cholesterischen Monomeren, Oligomeren oder Polymeren mit achiralen Monomeren, Mischungen aus cholesterischen Oligomeren mit chiralen und achiralen Monomeren und Mischungen aus achiralen flüssigkristalline Phasen aufweisenden Monomeren, Oligomeren oder Polymeren mit chiralen Monomeren.

3. Verfahren nach Anspruch 2, **dadurch gekennzeichnet**, daß als cholesterisches Oligomer ein flüssigkristallines Siloxan verwendet wird.

4. Verfahren nach Anspruch 1 bis 3, **dadurch gekennzeichnet**, daß zwischen dem ersten Verfahrensschritt (der Vorbelichtung) und dem zweiten Verfahrensschritt eine Temperaturänderung im Bereich von -100 bis 100°C erfolgt ist.

5. Verfahren zur Herstellung photostrukturierter cholesterischer Filter und Reflektoren mit verbreiterten Reflexionsbanden aus cholesterischen flüssigkristallinen Materialien **dadurch gekennzeichnet**, daß die Belichtungen des flüssigkristallinen Materials mittels der erfindungsgemäßen Verfahrensschritte 1 bis 3 gemäß Anspruch 1 durch eine Maske erfolgt und anschließend die Maske verschoben oder durch eine zweite Maske ersetzt wird und die erfindungsgemäßen Verfahrensschritte 1 bis 3 gemäß Anspruch 1 unter Veränderung mindestens eines Parameters in den Verfahrensschritten 1 oder 2 so wiederholt wird, daß ein noch nicht belichteter Teil des Materials bestrahlt wird.

6. Photopolymerisierter cholesterischer Flüssigkristall mit um mindestens 10 nm gegenüber mit konventioneller Belichtung hergestelltem photopolymerisiertem cholesterischem Flüssigkristall verbreiterter cholesterischer Reflexionsbande, **dadurch gekennzeichnet**, daß er nach einem Verfahren gemäß einem der Ansprüche 1 bis 5 hergestellt sind.

7. Optisches Element mit verbreiterter cholesterischer Reflexionsbande, **dadurch gekennzeichnet**, daß es mindestens eine Schicht enthaltend Material mit verbreiterter cholesterischer Reflexionsbande umfasst, das nach Verfahren gemäß einem der Ansprüche 1 bis 6 hergestellt wurde.

8. Optisches Element nach Anspruch 7, **dadurch gekennzeichnet**, daß die Reflexionsbande eine Bandbreite von mehr als 100 nm hat.

9. Optisches Element nach Anspruch 7 oder 8, **dadurch gekennzeichnet**, daß es zusätzlich eine λ/4-Verzögerungsschicht umfasst.

10. Vorrichtung enthaltend mindestens ein optisches Element gemäß Anspruch 7, 8 oder 9.

## Claims

1. Process for broadening the cholesteric reflection bands of photopolymerizable cholesteric liquid crystals, **characterized in that** it comprises the following three process steps:
1) partial polymerization of a layer containing photopolymerizable cholesteric liquid crystals by exposure to actinic light for a defined brief period at a defined temperature,
2) observance of a defined waiting time without exposure (dark phase) at a defined temperature,
3) fixing of the resultant layer by exposure to actinic light at a defined temperature.

2. Process according to Claim 1, **characterized in that** the photopolymerizable material having cholesteric properties is selected from the group consisting of cholesteric monomers, oligomers or polymers, mixtures of cholesteric monomers, oligomers or polymers with chiral monomers, mixtures of cholesteric monomers, oligomers or polymers with achiral monomers, mixtures of cholesteric oligomers with chiral and achiral monomers, and mixtures of achiral monomers, oligomers or polymers having liquid-crystalline phases with chiral monomers.

3. Process according to Claim 2, **characterized in that** the cholesteric oligomer used is a liquid-crystalline siloxane.

4. Process according to any of Claims 1 to 3, **characterized in that** a temperature change in the range from -100 to 100°C has taken place between the first process step (the pre-exposure) and the second process step.

5. Process for the production of photostructured cholesteric filters and reflectors having broadened reflection bands from cholesteric liquid-crystalline materials, **characterized in that** it comprises carrying out the exposures of the liquid-crystalline material by means of process steps 1 to 3 according to Claim 1 through a mask and then moving the mask or replacing the mask by a second mask, and repeating process steps 1 to 3 according to Claim 1 with a change in at least one parameter in process steps 1 and 2 in such a way that an as yet unexposed part of the material is irradiated.

6. Photopolymerized cholesteric liquid crystal, **characterized in that** it is prepared by a process according to any one of Claims 1 to 5, having a cholesteric reflection band which is broadened by at least 10 nm compared with a photopolymerized cholesteric liquid crystal prepared by conventional exposure.

7. Optical element having a broadened cholesteric reflection band, **characterized in that** it comprises at least one layer containing material having a broadened cholesteric reflection band prepared by a process according to any one of Claims 1 to 6.

8. Optical element according to Claim 7, **characterized in that** the reflection band has a band width of greater than 100 nm.

9. Optical element according to Claim 7 or 8, **characterized in that** it additionally includes a λ/4 retardation layer.

10. Device containing at least one optical element according to Claim 7, 8 or 9.

## Revendications

1. Procédé d'élargissement des bandes de réflexion cholestériques de cristaux liquides cholestériques photopolymérisables, **caractérisé en ce qu**'il comprend les trois étapes de procédé suivantes :
1) la polymérisation partielle d'une couche contenant des cristaux liquides cholestériques photopolymérisables par une exposition définie de courte durée à l'aide d'une lumière actinique à une température définie,
2) le maintien d'une période d'attente définie sans exposition (phase sombre) à une température définie
3) la fixation de la couche ainsi obtenue par exposition à l'aide d'une lumière actinique à une température définie.

2. Procédé selon la revendication 1, **caractérisé en ce que** le matériau photopolymérisable à propriétés cholestériques est choisi parmi le groupe des monomères, des oligomères ou des polymères cholestériques, des mélanges de monomères, d'oligomères ou de polymères cholestériques à monomères chiraux, des mélanges de monomères, d'oligomères ou de polymères cholestériques à monomères achiraux, des mélanges d'oligomères cholestériques à monomères chiraux et achiraux et des mélanges de monomères, d'oligomères ou de polymères à monomères chiraux, présentant des phases cristallines liquides achirales.

3. Procédé selon la revendication 2, **caractérisé en ce que** l'on utilise, en tant qu'oligomère cholestérique, un siloxane sous forme de cristal liquide.

4. Procédé selon la revendication 1 à 3, **caractérisé en ce qu**'il se produit, entre la première étape de procédé (l'exposition préalable) et la deuxième étape de procédé, une modification de température dans le domaine de -100 à 100°C.

5. Procédé de fabrication de filtres et de réflecteurs cholestériques photo-structurés possédant des bandes de réflexion élargies en matériaux cholestériques sous forme de cristaux liquides, **caractérisé en ce que** l'on procède aux expositions du matériau sous forme de cristal liquide par l'intermédiaire d'un masque à l'aide des étapes de procédé 1 à 3 selon l'invention, conformément à la revendication 1, en ce que l'on décale ou remplace ensuite le masque par un deuxième masque, et en ce que l'on répète les étapes de procédé 1 à 3 selon l'invention, conformément à la revendication 1, en modifiant au moins un paramètre dans les étapes de procédé 1 ou 2, de telle sorte qu'une partie encore non exposée du matériau soit irradiée.

6. Cristal liquide cholestérique photopolymérisé à bande de réflexion cholestérique élargie d'au moins 10 nm par comparaison à un cristal liquide cholestérique photopolymérisé fabriqué à l'aide d'une exposition classique, **caractérisé en ce qu**'il est fabriqué conformément à un procédé selon l'une des revendications 1 à 5.

7. Élément optique à bande de réflexion cholestérique élargie, **caractérisé en ce qu**'il comprend au moins une couche contenant un matériau à bande de réflexion cholestérique élargie, qui a été fabriqué par des procédés selon l'une des revendications 1 à 6.

8. Élément optique selon la revendication 7, **caractérisé en ce que** la bande de réflexion possède une largeur de bande de plus de 100 nm.

9. Élément optique selon la revendication 7 ou 8, **caractérisé en ce qu**'il comprend en sus une couche de retardement d'une valeur de λ/4.

10. Dispositif comprenant au moins un élément optique selon la revendication 7, 8 ou 9.
